# EUROPEAN PATENT APPLICATION

(11) **EP 3 389 316 A1**
(43) Date of publication of application: **17.10.2018**
(21) Application number: 17165826.3
(22) Date of filing: 10.04.2017
(51) Int. Cl.: H04W 52/02

(54) **AUTOMATED ASSET TRACKING**

(71) Applicant: Viloc NV, 2240 Zandhoven (BE)
(72) Inventor: SPINNEWYN, Jeroen, 2050 Antwerpen (BE)
(74) Representative: DenK iP

(57) **Abstract**

A wireless tag (100) comprising: - a transmitter (110) configured for transmitting messages using a first wireless signal and using a first protocol towards the short range base station (200), and configured for transmitting messages using a second wireless signal and using a second protocol towards a long range base station, wherein the range of the second signal using the second protocol is longer than the range of the first signal using the first protocol.

## Description

### Field of the invention

The invention relates to the field of automated tool management. More specifically it relates to tags which can be connected to a tool and which can communicate wirelessly with a base station.

### Background of the invention

The management of equipment in a construction site is typically a difficult task to achieve. Different types of equipment may be moved between different locations on the site. Moreover they may be used by different persons which makes it difficult to track where the equipment is, certainly when the equipment is moved off site.

This may be solved by connecting a tag to the equipment wherein the tag can transmit its identification code over a wireless link to a data store. By consulting the data store it is possible to verify which equipment is on site.

It is, however, not possible to track the equipment for which the tags are out of reach of the data store. If may for example be that the tag is out of range of the data store when the tag is moved off site.

A solution might be to integrate a GPS module in the tag and to increase the range of the RF signal. However, in that case the power consumption of the tag may be an issue as a higher power consumption will result in a reduced lifetime.

Hence there is still room for improvement in tags and systems for tracing tags especially with relation to the power consumption of the tags and with relation to the range within which the tags can be traced.

### Summary of the invention

It is an object of embodiments of the present invention to provide tags, a base station, and a system which make it possible to trace the tags.

The above objective is accomplished by a method and device according to the present invention.

In a first aspect embodiments of the present invention relate to a wireless tag for sending messages to a base station. The tag comprises a transmitter configured for transmitting messages using a first wireless signal and using a first protocol towards a short range base station (200), and configured for transmitting messages using a second wireless signal and using a second protocol towards a long range base station, wherein the range of the second signal using the second protocol is longer than the range of the first signal using the first protocol.

The transmitted messages using the first wireless signal and first protocol and the second wireless signal and second protocol may be received by respectively long and short range base stations. Based thereon the tags may be localised. It is an advantage of embodiments of the present invention that the area in which a tag can be localised is increased by having a transmitter which can sent messages over a longer range (using the second signal and the second protocol) compared to a tag which can only send over the shorter range. Moreover, as messages are also sent using the first signal and the first protocol which has a shorter range, these messages can be captured by different, more local, base stations thus enhancing the resolution of the localisation. By having a transmitter which can send messages using a first wireless signal and first protocol and using a second wireless signal and second protocol it is moreover possible to have a tag which has a lower power consumption compared with a tag which only sends messages over the longer range and with which a similar localisation resolution and localisation range can be achieved.

In embodiments of the present invention the transmitter is configured for regularly transmitting an acknowledge request using the first wireless signal and using the first protocol. The transmitter may moreover comprise a receiver for receiving a response on the acknowledge request, from a short range base station, and a controller for putting the tag in long range mode if no response is received from a short range base station within a pre-defined time period from sending the acknowledge request and this for a pre-defined number of acknowledge requests, and for putting the tag in short range mode when a response from a short range base station on an acknowledge request is received within the pre-defined time period.

In embodiments of the present invention the transmitter is configured for regularly transmitting a message using the second wireless signal and using the second protocol when the tag is in long range mode.

It is an advantage of embodiments of the present invention that the controller is adapted for putting the tag in short range mode or in long range mode depending on the presence of a short range base station within reach of the tag.

In long range mode the tag is adapted for regularly transmitting messages using a second signal and second protocol. This allows to trace the tags even if they are out of reach of the short range base station. In embodiments of the present invention the range of the second signal using the second protocol is further than the range of the first signal using the first protocol. This may be achieved by a higher transmit power of the second signal, it may also be achieved by a higher redundancy in the messages of the second protocol, or a different modulation technique.

In short range mode, a short range base station is within reach of the tag and hence the tag can operate with a reduced power consumption. In embodiments of the present invention the first signal combined with the first protocol may be less power consuming than the second signal combined with the second protocol. The presence of short range base stations in the neighbourhood of the tag is checked by transmitting a periodic acknowledge request using a first signal.

In embodiments of the present invention the transmitter may be configured for not transmitting a message using the second signal and using the second protocol when the tag is in short range mode, or for transmitting a message using the second signal and using the second protocol at a reduced rate. Transmitting messages using the second signal and using the second protocol in the short range mode may for example be useful for backward compatibility or for testing purposes.

It is an advantage of embodiments of the present invention that when the short range base station is within reach of the tag (i.e. when the tag receives responses on the acknowledge requests from a short range base station), no, or less, messages are transmitted using the second signal and using the second protocol as this reduces the power consumption of the tag. Moreover, messages transmitted using the second signal and the second protocol may be transmitted to a long range base station which is part of a secondary network exploited by an external network operator. By switching to the short range mode when the short range base station is within reach of the tag, the number of messages transmitted using the second signal and the second protocol may be reduced resulting in a reduced cost to be paid to the external network operator. It is an advantage of embodiments of the present invention that upon reception of one response from the short range base station the tag stops transmitting messages or reduces the transmission of messages using the second signal and using the second protocol.

It is an advantage of embodiments of the present invention that the tags are transmitting messages using the second signal (e.g. at higher power than the first signal) and the second protocol when the short range base stations are not within reach of the tag (i.e. when the tag receives no responses on the acknowledge requests) as this enables communication of the tags with a long range base station even if they are out of reach of the first base station. In embodiments of the present invention the second protocol is different from the first protocol. This allows to communicate with a long range base station which has a different communication protocol than the short range base station.

It is an advantage of embodiments of the present invention that the acknowledge request is transmitted by the tag. This allows to reduce the functionality of the tag after receiving the acknowledge message and before transmitting the next acknowledge request. This is possible because after receiving the acknowledge message the tag does not need to be able to receive other messages. Hence it is possible to reduce the functionality of the tag thereby reducing the power consumption of the tag. It is for example possible to switch off the receiver and the transmitter functionality. Thereby the power consumption of the tag is reduced.

In embodiments of the present invention the receiver is configured for receiving or processing only the first response on an acknowledge request.

In embodiments of the present invention the receiver will stop listening upon reception of the first response on an acknowledge request. The receiver will start listening again after sending the next acknowledge request.

It is an advantage of embodiments of the present invention that in case a plurality of short range base stations are present only one response is received or processed by the receiver. By only receiving/processing the first response the power consumption of the tag can be reduced even more. In embodiments of the present invention the receiver may be adapted for configuring its settings to the base station with the best signal reception.

In embodiments of the present invention the transmitter is configured for transmitting the acknowledge requests with a constant period in between them.

In embodiments of the present invention the transmitter is configured for transmitting the first signal and the second signal in the same frequency band.

It is an advantage of embodiments of the present invention that the same hardware can be used for transmitting the first signal and for transmitting the second signal. It is for example possible to use the same antenna. This may for example be a quarter wavelength monopole antenna.

In embodiments of the present invention the second signal and the second protocol are conform with the LoRaWAN standard (e.g. LoRa WAN 1.0.1 or LoRaWAN 1.1. The invention is, however, not limited thereto. Other long range networks like for example Sigfox, may be used as secondary network. In embodiments of the present invention other local network protocols may be adapted for use in this invention.

In embodiments of the present invention the transmitter is configured for transmitting the message using the second signal and the second protocol.

It is an advantage of embodiments of the present invention that even if the tag is outside the range of the short range base stations, or even if it is inside the range of short range base stations, it may be traced by long range base stations. This is achieved by regularly sending a message using the second signal and using the second protocol. In embodiments of the present invention a fixed period may be present between these messages. This may for example be every day. In embodiments of the present invention this period may be programmable. The period may be depending on the tag being in the range or outside the range of a short range base station.

In embodiments of the present invention the controller comprises a plurality of parameters for controlling the tag and a plurality of profiles each corresponding with a specific set of parameters, and the controller comprises at least a first profile which by default is used during the short range mode and at least a second profile which by default is used during the long range mode.

It is an advantage of embodiments of the present invention that parameter settings can be changed when changing between short range mode and long range mode. It is an advantage that this can be done without interaction from the base stations. The reason therefore is that the controller comprises at least a first profile and a second profile and that by default (i.e. when it is not modified by a short range base station or by a long range base station) the first profile is used during the short range mode and the second profile is used during the long range mode.

In embodiments of the present invention the controller is configured such that a short range base station and/or a long range base station and or an input of a sensor of the tag can set which profile should be used in the short range mode and which profile should be used in the long range mode.

It is an advantage of embodiments of the present invention that the profile which is used during the short range mode and the profile which is used during the long range mode can be modified by a short range base station and/or by a long range base station.

A different profile might for example be used if a tag is stolen. In that case it is advantageous to use a profile which results in the fact that the first signal and/or the second signal are transmitting with a higher transmit power. In that case it might also be advantageous to increase the frequency at which acknowledge requests are sent and/or at which messages are sent to the long range base stations. In embodiments of the present invention the tag may comprise a sensor (e.g. for tamper detection). Based on the sensory input the controller may be adapted for selecting a different profile.

It might also be useful to use different profiles for increasing the battery lifetime of a tag. By changing the profile the time between two messages may for example be increased. A different profile may be used to increase the localisation accuracy of a tag at the cost of battery lifetime.

In embodiments of the present invention the transmitter is configured for sending a message which comprises data to indicate which profile is used in the long range mode and which profile is used in the short range mode and/or wherein the receiver is configured for extracting from a message from a base station which profile should be used in the long range mode and which profile should be used in the short range mode.

In embodiments of the present invention the acknowledge request comprises data to indicate which profile is used in the long range mode and which profile is used in the short range mode. In embodiments of the present invention the receiver is configured for extracting from the response from the short range base station which profile should be used in the long range mode and which profile should be used in the long range mode. It is an advantage of embodiments of the present invention that the short range base station can verify which profile is used in the long range mode and which profile is used in the short range mode. It is an advantage of embodiments of the present invention that, if required, the short range base station can change the profile which is used in the long range mode and the profile which is used in the short range mode.

In embodiments of the present invention the tag comprises a tamper strip and the transmitter is configured for sending a message which comprises data to indicate a broken tamper strip when the tamper strip is broken.

In embodiments of the present invention the acknowledge request comprises data to indicate a broken tamper strip.

In embodiments of the present invention the tag may be configured to switch to a specific profile after detecting specific sensory input such as after tamper detection, or after movement detection, or after extreme temperature measurements.

In a second aspect embodiments of the present invention relate to a short range base station for communicating with a tag through a wireless communication link and for communicating with a database. The short range base station comprises:
- a receiver configured for receiving an acknowledge request, which is sent by a tag using a first signal and a first protocol,
- a transmitter configured for sending a response on the acknowledge requests,
- a database connector configured for updating the database with information from the acknowledge requests.

It is an advantage of embodiments of the present invention that the location of a tag can be traced. This can be done by consulting the database wherein the short range base stations are storing the information from the acknowledge requests. In embodiments of the present invention the receiver of the short range base station is configured for receiving messages from the tags which are not acknowledge requests. The information from these messages may also be stored in the database and used to locate the tag. In embodiments of the present invention localisation is possible based on the location of the receiving base station or combining the data of multiple base stations when these multiple base stations have received the same message or acknowledge request from a tag. Combining data of multiple base station may result in a higher accuracy of the estimated position of the tag. In embodiments of the present invention the database is a database in the cloud.

In embodiments of the present invention the transmitter is configured for sending a response on the acknowledge requests a time delay after receiving the acknowledge request and wherein the time delay is selected in function of the power of the first signal.

It is an advantage of embodiments of the present invention that the chance of simultaneous transmission of responses on the acknowledge requests from different short range base stations is lowered. The reason therefore is as follows. If a plurality of short range base stations are present in the reach of a tag all of these short range base stations will respond on the acknowledge requests from the tag. This might lead to simultaneous transmissions of the responses. The chance for simultaneously transmitting a response is lowered by sending the response after a time delay which is depending on the power of the first signal. This power is lower for base stations which are further away from the tag.

In embodiments of the present invention the transmitter is configured such that a longer time delay is selected if the power of the first signal is smaller.

In embodiments of the present invention the first signal will arrive with the lowest power at short range base stations which are located the furthest from the tag. In embodiments of the present invention that short range base stations will respond with the longest delay. Inversely, the short range base station which receives the acknowledge request message the best well send the response the first.

In embodiments of the present invention the transmitter is configured for additionally adding a random time period to the time delay.

It is an advantage of embodiments of the present invention that even if two short range base stations are receiving the acknowledge request with the same signal, it is prevented that both responses are transmitted at the same time. The reason therefore is that additionally a random time period is added to the time delay.

In embodiments of the present invention the transmitter is configured for transmitting a message which comprises the profiles to be used in long range mode and in short range mode.

In embodiments of the present invention the response on the acknowledge request comprises the profiles which should be used in long range mode and in short range mode.

In a third aspect embodiments of the present invention relate to a tag tracing system. The tag tracing system comprises at least one tag in accordance with embodiments of the present invention, and at least one short range base station in accordance with embodiments of the present invention.

It is an advantage of embodiments of the present that a tag receives responses on its acknowledge requests when it is within reach of a short range base station. This allows for example to reduce the power consumption of the tags when they are within reach of a short range base station and to increase the range of messages transmitted by the tag when it is not within reach of the short range base station. These messages may for example be transmitted using a second signal and a second protocol. The messages transmitted using the second signal and the second protocol may be received by long range base stations which are spaced further away from the tags than short range base stations. It is an advantage of embodiments of the present invention that tag information is stored in a database by the short base stations. In embodiments of the present invention the tag tracing system may also be configured to consult the message information, from the tags, received by the long range base stations. This tag information may also be stored in the database. In embodiments of the present invention the tag tracing system may comprise at least one long range base station which is also storing the tag information in the database. Also the base station from which the tag info is coming may be stored in a database. This allows to trace the tag to a certain base station. The database may be a distributed database.

In embodiments of the present invention the tag tracing system may comprise equipment wherein the tags are attached to the equipment.

It is an advantage of embodiments of the present invention that equipment can be traced by attaching tags to the equipment and by consulting the database. Localisation is thereby possible based on the location of the receiving base station which may be a short range or a long range station.

This equipment may be construction equipment, but also any other tools such as for example tools in the event industry may be tracked by attaching tags to them. It is for example also possible to tag musical instruments and equipment related thereto.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a schematic drawing of a tag in accordance with embodiments of the present invention.
FIG. 2 shows a schematic drawing of a short range base station in accordance with embodiments of the present invention.
FIG. 3 shows a schematic drawing of a tag tracing system in accordance with embodiments of the present invention.

Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention relates to tags, base stations and a tag tracing system for locating equipment to which the tags are attached. Therefore the tags send messages to short range base stations and/or to long range base stations. Locating a tag is possible based on the location of the base station that received the message from the tag.

In a first aspect embodiments of the present invention relate to a wireless tag 100 for sending messages to a short range base station 200 and a long range base station 500.

The tag comprises a transmitter configured for transmitting messages using a first wireless signal and using a first protocol towards the short range base station 200. The transmitter is moreover configured for transmitting messages using a second wireless signal and using a second protocol towards the long range base station 500, wherein the range of the second signal using the second protocol is longer than the range of the first signal using the first protocol.

In embodiments of the present invention the tag may comprise a transmitter 110 configured for regularly transmitting an acknowledge request using a first wireless signal and using a first protocol, and a receiver 120 for receiving a response on the acknowledge request from a short range base station 200.

In embodiments of the present invention the transmitter may also be configured to send messages without requiring an acknowledge. These messages may be transmitted at a higher rate that the acknowledge requests. Only a fraction of the messages may for example be acknowledge requests. The fraction of acknowledge requests may for example be reduced to save power and enable a higher network density of tags in a tag tracing system (to allow more tags in the network of tags in the tracing system). The fraction of acknowledge requests may be configurable. An acknowledge request may for example be transmitted only after every 14 messages. An acknowledge request may for example be transmitted only after the tag has transmitted more than 10 message, or even only after more than 12 message or even only after more than 24 messages, or even only after more than 20 messages. The rate at which the acknowledge requests are transmitted and/or the interval at which acknowledge requests are transmitted may be configurable. Also the power and interval of the messages which are not requiring an acknowledge request are configurable.

The tag may moreover comprise a controller 130 for putting the tag 100 in long range mode if no response is received from a short range base station within a pre-defined time period from sending the acknowledge request and this for a pre-defined number of acknowledge requests, and for putting the tag 100 in short range mode when a response from a short range base station 200 on an acknowledge request is received within the pre-defined time period.

In embodiments of the present invention the transmitter 110 may be configured for regularly transmitting a message using a second wireless signal and using a second protocol when the tag is in long range mode.

These messages using the second wireless signal and the second protocol may be received by a long range base station.

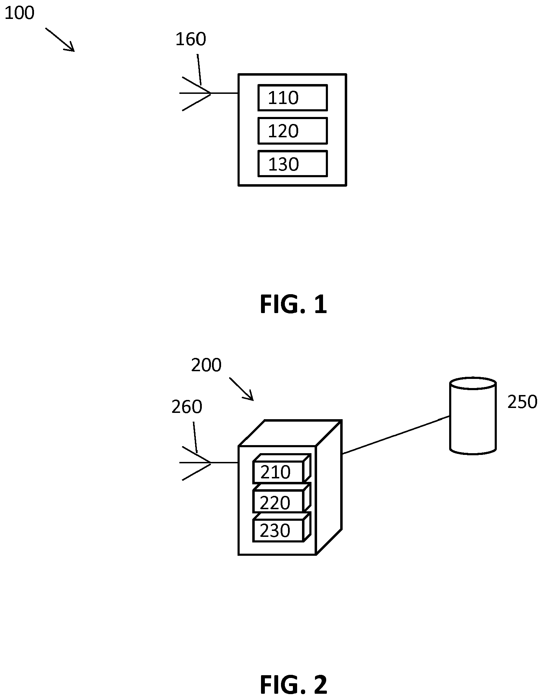

A schematic drawing of a tag 100 in accordance with embodiments of the present invention is illustrated in FIG. 1. In this example the tag comprises a transmitter 110, a receiver 120, a controller 130 and a transmit antenna 160. The transmit antenna 160 may be configured for sending an RF signal.

In embodiments of the present invention a constant period is present between the acknowledge requests. This may for example be 512 s. In embodiments of the present invention this period is programmable. This has advantage that it is possible to adjust the periodicity of the acknowledge request depending on the application requirements. If the application requirements allow it, the period between the messages may be increased. Thereby the power consumption of the tag will decrease. This period may for example be programmable between 0 and 60 min.

Once the tag detects that its acknowledge requests are not received by any short range base station it will switch from the short range mode to the long range mode. In this mode, the tag keeps on sending the acknowledge requests but it will also send messages using a second wireless signal and using a second protocol. In embodiments of the present invention the send interval of these message is customizable. By default the interval between these messages may for example be one day.

Upon detection of a short range base station the tag will stop (or reduce) sending the messages using the second wireless signal and using the second protocol and will fall back to its default operating mode (short range mode) wherein it regularly transmits an acknowledge request using the first wireless signal and using the first protocol.

The working of the tag is based upon detection of short range base stations which are in reach of the tag. To verify this the tag may send an acknowledge request message on a regular basis (this constant period is also referred to as the ack request interval). This acknowledge request is sent in both the short range mode and the long range mode. After sending the acknowledge request and after receiving a response from a short range base station the tag may reduce its functionalities (it may for example turn off the receive function) to reduce its power consumption. The only functionality which should remain present after receiving the response is functionality which enables sending the next acknowledge request and waiting for the response thereon. By selecting the signal output power, the sleep power and the send interval of the acknowledge requests the working tag can continue working for a period of more than 5 years or even more than 7 years, for example up to 9 years. This is for example dependent on the intervals between acknowledge requests and on the temperature.

As long as the tag receives responses on the acknowledge requests it will remain working in the short range mode. However, when the tag does not receive the response on an acknowledge request for a predefined number of times in a row, it will switch to the long range mode.

As the acknowledge request message is sent in both modes, a single incoming response of a short range base station will make the tag switch from long range mode to its default operating mode which is the short range mode. In embodiments of the present invention the short range base station may be configured for applying cryptographic signing techniques (hashing/encryption) to data in the acknowledge message. In embodiments of the present invention the tag may be configured to verify whether the message is originating from an approved base station based on the cryptographic information in the acknowledge message. In embodiments of the present invention the acknowledge requests and the messages from the tags may be signed to prevent spoofing.

In the long range mode messages are transmitted regularly by the transmitter using the second signal and the second protocol. The period between these messages may be programmable. It may for example be programmable between 1h and 16 months.

The first signal and the second signal may for example be a frequency in the ISM bands (industrial, scientific and medical radio bands). The frequency of the first signal may for example be 868 MHz. The frequency of the first signal may be the same as the frequency of the second signal.

A tag 100 may for example be within reach of a short range base station if it is within 100 meters of the short range base station in an outdoor environment or within 50 metres in an indoor environment.

In short range mode the power of the first signal may for example be between -4dBm and +20 dBm. In long range mode the power of the second signal may for example vary between +4 dBm and +20 dBm. This may for example be depending on local regulatory rules. In embodiments of the present invention the tag may be adapted to change the power based on an automatic detection of network parameters (e.g. signal quality, and distance). In both short and long range mode the power of the wireless signal may be adapted automatically based on network conditions. In the short range mode this may be done by acknowledge messages and in the long range mode this may be done by messages from a server or for example commands specified in LoRaWAN ADR (adaptive datarate) protocol.

The first protocol may be different from the second protocol. The second protocol (comprising the modulation technique used) may for example be conform with a publicly available network such as the Lora network. The tag 100 may for example have a built-in LoRaWAN subscription or it may be compatible with other types of long range base stations.

The location accuracy in the long range mode is depending on the long range base stations. In case of Lora base stations it may for example range between 20 and 200 m.

A tag may for example have the following dimensions L:39 mm x W:34 mm x H:16 mm, and it may for example weigh 30 g.

In a second aspect embodiments of the present invention relate to a short range base station 200 for communicating with a tag 100 according to embodiments of the present invention. Communication with the tag is achieved through a wireless communication link. Moreover the short range base station is adapted for communicating with a database 250. The short range base station 200 comprises a receiver 210 configured for receiving an acknowledge request, which is sent by a tag 100 using a first signal and a first protocol, and a transmitter 220 configured for sending a response on the acknowledge requests a time delay after receiving the acknowledge request, wherein the time delay is selected in function of the power of the first signal. The short range base station moreover comprises a database connector 230 configured for updating the database with information from the acknowledge requests. This may be done through intermediate layers (middleware etc.).

A schematic drawing of a short range base station 200 in accordance with embodiments of the present invention is illustrated in FIG. 2. The short range base station comprises a receiver 210, a transmitter 220, a database connector 230 and an antenna 260. In embodiments of the present invention the receiver 210 and the transmitter 220 may be integrated in one component also referred to as the transceiver.

As explained above, in short range mode, the tag 100 will send an acknowledge request and, when a short range base station 200 is in reach of the tag it will reply with a response on the acknowledge request. In embodiments of the present invention the short range base station will respond on the acknowledge request with a delay to prevent the situation in which multiple short range base stations reply at the same time to the same tag. By doing so it can be prevented that multiple responses on an acknowledge request interfere with each other. Interferences of these responses could prevent the tag from decoding them. Therefore it is advantageous that this interference is prevented from the beginning.

Therefore, in embodiments of the present invention, the transmitter of the base station may be configured for sending a response a time delay after receiving the acknowledge request. In embodiments of the present invention the calculation of the time delay may be based on the receive level of the acknowledge request. This way, the short range base station which does receive the acknowledge request message the best will send its response as first. In embodiments of the present invention the tag is configured such that once it receives the response it stops listening on its receiving frequency. This receiving frequency may be different from the sending frequency and may be programmable. In embodiments of the present invention the short range base station may be configured for adapting its transmit power based on the received power of the acknowledge request.

In order to prevent that two short range base stations send their message at the same time in case they receive the acknowledge request at the same time and with the same power, an extra random delay may be added to the delay. Also the transmit power of the responses on the acknowledge requests may be randomized.

In embodiments of the present invention the controller of a tag comprises a plurality of parameters for controlling a tag. The controller may comprise a plurality of profiles each corresponding with a specific set of parameters. Each tag may for example have 255 profiles. During production some of these profiles may be stored in the memory of the tag 100 and a first profile may be assigned to be used in short range mode and a second profile may be assigned to be used in long range mode. This allows the tag 100 to change parameter settings when it switches mode without interaction of a base station.

In embodiments of the present invention a short range base station (e.g. through the acknowledge messages) and/or a long range base station (through the secondary network, e.g. the LoRaWAN network) can set which profile it has to use in short range mode and which profile it has to use in long range mode. The short range base station or long range base station may therefore transmit the profile number. Alternatively the base stations may transmit profile parameters. The short range base station may be adapted to transmit a broadcast message to a plurality of tags at a certain moment in time. The acknowledge message then may contain the moment when the broadcast message will be transmitted. All tags can then listen at that moment to receive those settings in one time. It is advantageous that using these broadcast messages the network load is reduced. Through the messages cited above parameter settings of the tag 100 can be changed by a short range base station and/or by a long range base station. This mechanism is useful to change the behaviour of the tag 100 according to the situation it is in. Below some examples:
- When a tag 100 is stolen it is possible to change the profile such that it sends messages (e.g. acknowledge requests) with more transmit power and more frequently in order to trace back the tag.
- To extend the battery life a profile may be used in which the time between two messages is increased.

Each time a tag 100 sends an acknowledge request it may include its set of profiles it is using. This may for example be one profile for short range mode and one for long range mode. In embodiments of the present invention the base station may receive this set of profiles and may check if these profiles are the ones which it prefers. If not the base station may send the correct set of profiles via the response on the acknowledge request. The tag may comprise a default profile. Settings not specified in the active profile (e.g. the profile in long range mode or the profile in long range mode) may be inherited from the default profile. Parameters in this default profile may also be adapted by a short range base station or by a long range base station.

If the tag 100 detects it is using a different set of profiles than the base station is asking, it may switch profiles.

In embodiments of the present invention the tag may comprise a configurable filter. This filter is configured to detect if a base station is genuine. Only if this is the case the tag will change its settings upon reception of a message or acknowledge from the base station.

In a third aspect embodiments of the present invention relate to a tag tracing system 300. The tag tracing system 300 comprises at least one tag in accordance with embodiments of the present invention, and at least one short range base station. The short range base station comprises a receiver 210 configured for receiving an acknowledge request, which is sent by a tag using the first signal and the first protocol. The short range base station also comprises a transmitter 220 configured for sending a response on the acknowledge requests and a database connector 230 configured for updating a database 250 with information from the acknowledge requests.

In embodiments of the present invention the tag tracing system may moreover comprise at least one long range base station 500 adapted for receiving a message, which is sent by a tag 100 using the second signal and the second protocol wherein the long range base station is configured for updating the database with information from the messages from the tags.

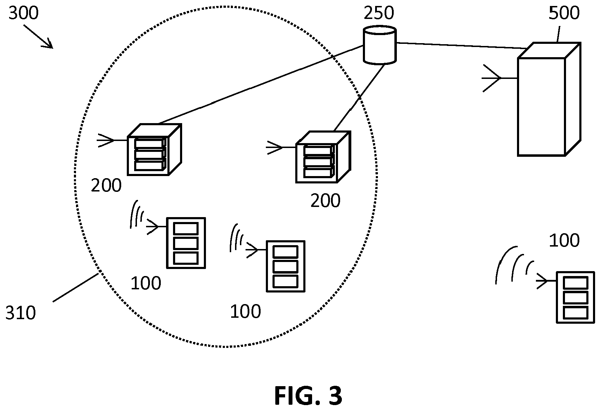

A schematic drawing of a tag tracing system 300 in accordance with embodiments of the present invention is illustrated in FIG. 3. The figure shows tags 100 within the range of short range base stations 200 (i.e. they are receiving responses on their acknowledge requests). In this schematic this range is indicated with the dashed line 310. The figure also shows a long range base station 500 and a tag 100 which is out of reach of the short range base stations and which has increased its transmit power to communicate with a long reach base station 500. Information from the base stations 500, 200 is stored in the database 250. This may be a distributed database. It may be a database in the cloud.

The tags 100 may be small enough so they can get securely attached to all kinds of construction equipment (drills, grinding wheels, lifting equipment and generators) or other types of equipment/tools.

The number of tags that can be followed using a tag tracing system can be larger than 1000 or even larger than 10000. Depending on the number of tags that are present in the tag tracing system, the network settings (such as power of the first signal, interval between the acknowledge requests) may be adapted to maintain network performance when increasing the number of tags (the network density). By default the network settings may be such that about 4000 tags can be followed. The power of the first signal may also be optimised as a function of the power consumption of the tags. The tag tracing system may for example be used on a site where at least 750 tools are used (e.g. 15 tools per construction worker, 50 construction workers). The tag tracing system may also be used for tracing only one tag.

In embodiments of the present invention the information of the database may be represented in a dashboard to get detailed insights into the use of the equipment that makes it possible to immediately optimize your equipment management. The information in the database may also be accessible by a third party (application or services) through the use of an application programming interface. As the tags can switch between a long range and a short range mode (different signals with different power levels and different protocols are possible) it is possible to track the tags even if they are taken out of reach of the short range base stations (e.g. if they are taken off site).

## Claims

1. - A wireless tag (100) for sending messages to a base station, the tag comprising a transmitter (110) configured for transmitting messages using a first wireless signal and using a first protocol towards a short range base station (200), and configured for transmitting messages using a second wireless signal and using a second protocol towards a long range base station, wherein the range of the second signal using the second protocol is longer than the range of the first signal using the first protocol.

2. - A wireless tag (100) according to claim 1, wherein the transmitter (110) is configured for regularly transmitting an acknowledge request using the first wireless signal and using the first protocol, the wireless tag comprising:
- a receiver (120) for receiving a response on the acknowledge request, from a short range base station (200),
- a controller (130) for putting the tag (100) in long range mode if no response is received from a short range base station within a pre-defined time period from sending the acknowledge request and this for a pre-defined number of acknowledge requests, and for putting the tag (100) in short range mode when a response from a short range base station (200) on an acknowledge request is received within the pre-defined time period,
- wherein the transmitter (110) is configured for regularly transmitting a message using the second wireless signal and using the second protocol when the tag is in long range mode.

3. - A tag (100) according to claim 2, wherein the receiver (120) is configured for receiving or processing only the first response on an acknowledge request.

4. - A tag (100) according to any of the claims 2 to 3 wherein the transmitter (110) is configured for transmitting the acknowledge requests with a constant period in between them.

5. - A tag (100) according to any of the claims 2 to 4 wherein the transmitter (110) is configured for transmitting the first signal and the second signal in the same frequency band.

6. - A tag (100) according to any of the claims 2 to 5, wherein the controller (130) comprises a plurality of parameters for controlling the tag and a plurality of profiles each corresponding with a specific set of parameters, and wherein the controller (130) comprises at least a first profile which by default is used during the short range mode and at least a second profile which by default is used during the long range mode.

7. - A tag (100) according to claim 6, wherein the controller (130) is configured such that a short range base station and/or a long range base station (500) and or an input of a sensor of the tag can set which profile should be used in the short range mode and which profile should be used in the long range mode.

8. A tag (100) according to any of the claims 6 or 7, wherein the transmitter is configured for sending a message which comprises data to indicate which profile is used in the long range mode and which profile is used in the short range mode and/or wherein the receiver is configured for extracting from a message from a base station which profile should be used in the long range mode and which profile should be used in the short range mode.

9. - A tag (100) according to any of the previous claims, wherein the tag comprises a tamper strip and wherein the transmitter is configured for sending a message which comprises data to indicate a broken tamper strip when the tamper strip is broken.

10. - A short range base station (200) for communicating with a tag (100), according to any of the claims 2 to 9, through a wireless communication link and for communicating with a database (250), the short range base station (200) comprising:
- a receiver (210) configured for receiving an acknowledge request, which is sent by a tag (100) using a first signal and a first protocol,
- a transmitter (220) configured for sending a response on the acknowledge requests,
- a database connector (230) configured for updating the database with information from the acknowledge requests.

11. - A short range base station (200) according to claim 10 wherein the transmitter (220) is configured for sending a response on the acknowledge requests a time delay after receiving the acknowledge request and wherein the time delay is selected in function of the power of the first signal.

12. - A short range base station (200) according to claim 11 wherein the transmitter (220) is configured such that a longer time delay is selected if the power of the first signal is smaller.

13. - A short range base station (200) according to any of the claims 11 or 12 wherein the transmitter (220) is configured for additionally adding a random time period to the time delay.

14. - A short range base station (200) according to any of the claims 10 to 13 wherein the transmitter (220) is configured for transmitting a message which comprises the profiles to be used in long range mode and in short range mode.

15. - A tag tracing system (300), the tag tracing system (300) comprising at least one tag (100) in accordance with any of the claims 1 to 9, and at least one short range base station according to any of the claims 10 to 14.
